# EUROPÄISCHE PATENTSCHRIFT

(11) **EP 2 911 928 B1**
(45) Veröffentlichungstag und Bekanntmachung des Hinweises auf die Patenterteilung: **11.10.2017**
(21) Anmeldenummer: 13792602.8
(22) Anmeldetag: 23.10.2013
(51) Int. Cl.: B60W 30/20, B60K 6/48, B60W 20/00

(54) **VERFAHREN ZUR DREHSCHWINGUNGSBERUHIGUNG IN EINEM ANTRIEBSSTRANG**
METHOD FOR DAMPING TORSIONAL VIBRATION IN A DRIVE TRAIN
PROCÉDÉ D'AMORTISSEMENT DES VIBRATIONS DE TORSION DANS UNE CHAÎNE CINÉMATIQUE

(30) Priorität: 25.10.2012 AT 504772012
(43) Veröffentlichungstag der Anmeldung: 02.09.2015
(73) Patentinhaber: IVD Prof. Hohenberg GmbH, 8010 Graz (AT); Beidl, Christian, 64285 Darmstadt (DE)
(72) Erfinder: BEIDL-STANGL, Gudrun, A-8063 Eggersdorf (AT); HOHENBERG, Günter, A-8020 Graz (AT); HÖFLER, Dieter, A-8020 Graz (AT)
(74) Vertreter: Babeluk, Michael
(86) Internationale Anmeldenummer: PCT/EP2013/072154
(87) Internationale Veröffentlichungsnummer: WO 2014/064144

(56) Entgegenhaltungen:
- DE-A1- 19 748 665
- DE-A1-102005 001 047

## Beschreibung

Die Erfindung betrifft ein Verfahren zur Drehschwingungsberuhigung in einem Antriebsstrang, welcher eine Brennkraftmaschine, insbesondere eine Hubkolbenmaschine, und zumindest eine mit dieser verbundene zusätzliche Maschine, insbesondere elektrische Maschine, aufweist, wobei während zumindest einer ersten Phase von der Brennkraftmaschine ein Drehmomentimpuls in den Antriebsstrang eingeleitet wird, und wobei durch die zusätzliche Maschine gezielt zumindest ein Drehmomentimpuls zur Drehschwingungsberuhigung generiert wird, wobei der Drehmomentimpuls der zusätzlichen Maschine phasenversetzt zum Drehmomentimpuls der Brennkraftmaschine in den Antriebsstrang während zumindest einer auf die erste Phase folgenden zweiten Phase eingebracht wird.

Herkömmliche Brennkraftmaschinen mit drei und weniger Zylindern haben aus vibrations- und drehschwingungstechnischer Sicht den Nachteil, dass durch die niedrigere Anregungsfrequenz aufgrund der geringen Anzahl an Zylindern eine verhältnismäßig hohe Leerlaufdrehzahl bzw. ein elastisches Element mit sehr geringer Steifigkeit zur Entkopplung im Antriebsstrang notwendig ist, um einen komfortablen Betrieb zu ermöglichen.

Die DE 10 2006 036 217 A1 beschreibt ein Verfahren zur Verbesserung der Fahreigenschaften eines Hybridantriebs, welcher mindesten einen Verbrennungsmotor und mindestens einen Elektromaschine aufweist. In mindestens einem Modulations-Betriebszustand des Hybridantriebs wird eine Betriebsgröße der mindestens einen Elektromotorfunktion, insbesondere eine Elektromotor-Drehzahl und/oder eine Elektromotor-Leistung, mit einem vorgegebenen Frequenzspektrum mit einer mindestens einer Modulationsamplitude, mindestens einer Modulationsfrequenz und mindestens einer Modulationsphase moduliert. Dadurch soll der hör- und spürbare Unterschied zwischen einem Fahren mit unterschiedlichen Nutzungen eines Verbrennungsmotors reduziert werden.

Es ist bekannt, bei einem Antriebsstrang mit einer Brennkraftmaschine und einer elektrischen Maschine, die elektrische Maschine zur aktiven Bedämpfung der Schwingungen (Auslöschen der Drehmomentspitzen) einzusetzen. So offenbart die DE 10 2009 047 116 A1 ein Verfahren zum Betreiben eines Hybridantriebs eines Kraftfahrzeugs, wobei der Hybridantrieb eine Brennkraftmaschine, einen Elektromotor und eine weitere Einheit aufweist, die über eine kraftführende Verbindung miteinander verbunden sind. Die kraftführende Verbindung wird mit einer Drehungleichförmigkeit in Form einer positiven oder negativen Abweichung einer Drehzahl von einer Solldrehzahl beaufschlagt, die durch die Brennkraftmaschine und/oder die Einheit erzeugt wird. Die Drehungleichförmigkeit wird ermittelt und der Elektromotor wird derart gesteuert und/oder geregelt, dass die Drehungleichförmigkeit durch ein Gegendrehmoment reduziert wird. Das Aufbringen des Gegenmomentes wirkt sich allerdings nachteilig auf den Wirkungsgrad aus.

Die DE 197 09 134 A1 beschreibt ein Antriebssystem für ein Fahrzeug mit einem Verbrennungsmotor und einer elektrischen Maschine, die den Verbrennungsmotor mit einem variierenden Drehmoment beaufschlagt, so dass Drehungleichförmigkeiten des Verbrennungsmotors verringert werden, wobei die Amplitude der Änderungen des von der elektrischen Maschine aufgebrachten Drehmoments bei Leerlauf im kalten Zustand des Verbrennungsmotors größer als im warmen Zustand ist. Die Leerlaufdrehzahl des Verbrennungsmotors bei tiefen Temperaturen wird nicht gegenüber derjenigen bei hohen Temperaturen angehoben. Die Verminderung der Drehungleichförmigkeitsamplitude wird hierbei dadurch bewirkt, dass die elektrische Maschine ein variierendes Drehmoment aufbringt, welches im zeitlichen Verlauf den Drehmomentschwankungen des Verbrennungsmotors ähnelt, aber im Wesentlichen gegenphasig zu ihnen ist.

Sowohl bei der DE 197 09 134 A1, als auch bei der DE 10 2009 047 116 A1 wird ein Gegendrehmoment durch den Elektromotor aufgebracht, was den Nachteil hat, dass für die Aufbringung des Gegendrehmomentes ein relativ hoher Energieaufwand nötig ist und somit der Gesamtwirkungsgrad wesentlich verschlechtert wird. Durch die Aufbringung des Gegendrehmomentes wird die Anregungsfrequenz nicht verändert.

Weitere Verfahren zur Drehschwingungsberuhigung in einem Antriebsstrang sind aus den Veröffentlichungen DE 197 48 665 A und DE 10 2005 001 047 A bekannt.

Aufgabe der Erfindung ist es, diesen Nachteil zu vermeiden und auf möglichst einfache und effiziente Weise eine Beruhigung der Schwingungen zu erzielen.

Erfindungsgemäß wird dies dadurch erreicht, dass der von der zusätzlichen Maschine generierte Drehmomentimpuls gleichsinnig zur Anregung durch die Brennkraftmaschine erfolgt, so dass die Anregungsfrequenz erhöht, vorzugsweise verdoppelt wird.

Der von der zusätzlichen Maschine generierte Drehmomentimpuls erfolgt dabei gleichsinnig zur Anregung durch die Brennkraftmaschine - und nicht gegensinnig dazu, wie bei bekannten Verfahren. Das erfindungsgemäße Verfahren unterscheidet sich vom Stand der Technik somit dadurch, dass der von der zusätzlichen Maschine generierte Drehmomentimpuls gleichsinnig zur Anregung durch die Brennkraftmaschine erfolgt, wobei die Anregungsfrequenz erhöht wird. Während die Veröffentlichungen DE 197 09 134 A1 und DE 10 2009 047 116 A1 auf die Verminderung der Drehungleichförmigkeit durch Dämpfung hinzielen, wird mit dem erfindungsgemäßen Verfahren die Frequenz der ungedämpften Ungleichförmigkeit erhöht, insbesondere verdoppelt, wodurch ein schwingungstechnisch günstigerer Zustand erreicht wird.

Für die gleichsinnige Anregung ist ein wesentlich geringerer Energieaufwand als bei einer gegensinnigen Anregung nötig, so dass mit dem erfindungsgemäßen Verfahren ein bedeutend höherer Wirkungsgrad erreicht werden kann, als bei bekannten Verfahren mit gegenphasiger Anregung.

Durch die Erhöhung der Anregungsfrequenz kann ein größerer Abstand von der Eigenfrequenz des Antriebsstranges erzielt werden. Das erfindungsgemäße Verfahren zielt somit - zum Unterschied zu bekannte Verfahren - nicht auf die Auslöschung der Drehungleichförmigkeit, sondern auf die Verminderung der Schwingungen durch Erhöhen der Anregungsfrequenz ab.

Durch die Vervielfachung (zum Beispiel Verdoppelung) des Anregungsspektrums und gleichzeitige Reduktion der Amplituden kann der nutzbare Drehzahlbereich vergrößert und eine deutliche Absenkung der Leerlaufdrehzahl, sowie ein höherer oder gleichbleibender Komfort erzielt werden.

Die Amplitude des von der zusätzlichen Maschine generierten Drehmomentimpulses kann im Wesentlichen der Amplitude des während der ersten Phase in den Antriebsstrang eingeleiteten Drehmomentimpulses entsprechen. Ebenso kann die Form des von der zusätzlichen Maschine generierten Drehmomentimpulses im Wesentlichen der Form des während der ersten Phase in den Antriebsstrang eingeleiteten Drehmomentimpulses nachempfunden werden, wobei vorzugsweise der während der zweiten Phase durch die zusätzliche Maschine generierte Drehmomentimpuls ein Dreieck-, Rechteck- oder Sinussignal ist. Das Spektrum des von der zusätzlichen Maschine während der zweiten Phase generierten Drehmomentimpulses kann dabei so gestaltet sein, dass definierte Abschnitte des Spektrums zwischen zwei aufeinanderfolgenden ersten Phasen wiederholt werden.

Insbesondere bei niedriger Batterieladung ist es vorteilhaft, wenn während der ersten Phase die zusätzliche Maschine generatorisch und während der zweiten Phase motorisch betrieben wird, wobei der Drehmomentimpuls der Brennkraftmaschine während der ersten Phase zumindest teilweise bedämpft und während der zweiten Phase zumindest der bedämpfte Anteil des Drehmomentimpulses dem Antriebsstrang wieder zugeführt wird. Somit kann die in der zweiten Phase für die Drehmomentimpulse der zusätzlichen Maschine aufzubringende Energie während der ersten Phase durch Dämpfung der Drehmomentimpulse der Brennkraftmaschine erzeugt werden.

Zur Ansteuerung der zusätzlichen Maschine kann der Drehmomentverlauf der Brennkraftmaschine entweder direkt oder indirekt über dem Drehzahlverlauf - vorzugsweise auf Grund von Informationen aus der Motorsteuereinheit - kontinuierlich ermittelt und der Drehmomentimpuls der zusätzlichen Maschine auf der Basis dieses Drehmomentverlaufes generiert werden. Alternativ dazu oder zusätzlich kann eine Zeitdifferenz zwischen zwei aufeinanderfolgenden Verbrennungen der Brennkraftmaschine, vorzugsweise aus der Information über motorische Größen, wie zum Beispiel Zündzeitpunkte und/oder Einspritzzeitpunkte, ermittelt und der Drehmomentimpuls der zusätzlichen Maschine auf der Basis dieser Zeitdifferenz generiert werden.

Die Zeitdifferenz und/oder der Drehmomentimpuls - Verlauf kann alternativ dazu auch aus der Information über den Drehzahlverlauf der zusätzlichen Maschine ermittelt werden.

Um eine gute Schwingungsverringerung zu erreichen, ist es vorteilhaft, wenn der in der zweiten Phase generierte Drehmomentimpuls der zusätzlichen Maschine bzw. die in der zweiten Phase generierten Drehmomentimpulse der zusätzlichen Maschine gleichmäßig zwischen zwei aufeinanderfolgenden Drehmomentimpulsen der Brennkraftmaschine positioniert wird bzw. werden.

Zwischen der Brennkraftmaschine und der zusätzlichen Maschine kann eine lösbare Verbindung - beispielsweise eine trennbare Kupplung - angeordnet sein. Besonders vorteilhaft ist es, wenn die lösbare Verbindung eine so hohe Drehsteifigkeit aufweist, dass sie im Frequenzbereich der primären Anregungen näherungsweise als starr betrachtet werden kann. Alternativ dazu kann auch vorgesehen sein, dass die lösbare Verbindung ein in ausgewählten Frequenzbereichen wirksames Entkoppelungselement, beispielsweise in Form eines elastisches Element oder Fliehkraftpendels, aufweist. Weiters kann zwischen der Brennkraftmaschine und der zusätzlichen Maschine gegebenenfalls auch ein Getriebe angeordnet sein.

Die Erfindung wird im Folgenden anhand der Fig. näher erläutert. Es zeigen schematisch:
- Fig. 1: eine Brennkraftmaschine zur Durchführung des erfindungsgemäßen Verfahrens;
- Fig. 2: einen Drehmomentverlauf eines Zylinders der Brennkraftmaschine; und
- Fig. 3: ein Amplitudenspektrum bei Anwendung des erfindungsgemäßen Verfahrens.

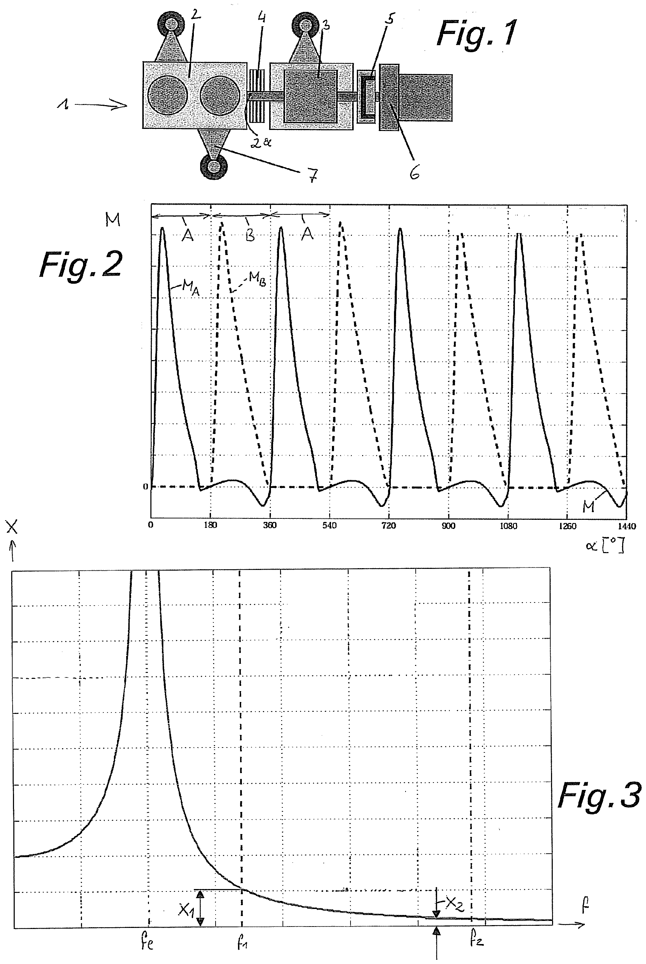

Fig. 1 zeigt einen Antriebsstrang 1 mit einer Brennkraftmaschine 2 und einer durch eine elektrische Maschine gebildeten zusätzlichen Maschine 3, welche entweder direkt, oder über ein (nicht weiter dargestelltes) Getriebe oder mit einer beispielsweise durch eine trennbare Kupplung gebildeten lösbaren Verbindung 4 miteinander verbunden sind. Brennkraftmaschine 2 und zusätzliche Maschine 3 sind entweder starr, oder über ein elastisches Element 5 mit dem restlichen Triebstrang 6 verbunden. Die Lagerung 7 ist vorzugsweise so gewählt, dass die an das Fahrzeug übertragenen Schwingungen ideal entkoppelt werden können.

Die Fig. 2 zeigt den Drehmomentverlauf eines Zylinders der Brennkraftmaschine 2, wobei das Drehmoment M über dem Kurbelwinkel α aufgetragen ist. Ein Zylinder der Brennkraftmaschine 2 erzeugt im Bereich einer ersten Phase A einen in den Antriebsstrang 1 eingeleiteten Drehmomentimpuls M_{A}. Von der zusätzlich zur Brennkraftmaschine 2 vorgesehenen zusätzlichen Maschine 3 wird ein positiver Drehmomentimpuls M_{B} - ähnlich jenem der Brennkraftmaschine 2 - so phasenversetzt in einer zweiten Phase B aufgebracht, dass es zu einer Erhöhung, zum Beispiel einer Verdoppelung der anregenden Frequenz f von f₁ nach f₂ (siehe Fig. 3) kommt. Für Viertakt-Brennkraftmaschinen beträgt der Phasenversatz, zum Beispiel bei einem 2-Zylinder-Motor, zwischen den Phasen A und B etwa 180°, bei Zweitakt-Brennkraftmaschinen etwa 90°.

Die Form des zusätzlich in der zweiten Phase B eingebrachten Drehmomentimpulses M_{B} ist idealer Weise gleich jener durch die Verbrennung erzeugten Drehmomentverlauf M_{A} an der Kurbelwelle 2a der Brennkraftmaschine 2. Es kann aber das Spektrum des zusätzlichen Drehmomentimpulses M_{B} so gewählt werden, dass definierte Anteile des Spektrums verdoppelt werden. Im einfachsten Fall entspricht das Ansteuersignal einem Dreieck-, Rechteck- oder Sinussignal. Die aufgebrachten Drehmomentverläufe können je nach Betriebspunkt und Anforderung (zum Beispiel energieeffiziente Steuerung oder adaptive Wahl durch den Fahrer) variieren.

Insbesondere bei niedriger Batterieladung kann der Drehmomentimpuls M_{A} der Brennkraftmaschine 2 durch die zusätzliche Maschine 3 bedämpft und phasenverschoben dem System zusätzlich aufgeprägt werden.

Zum Unterschied zu bekannten Lösungen wird beim vorliegenden Verfahren durch die zusätzliche Maschine 3 ein positiver Drehmomentimpuls M_{B} - also gleichsinnig, aber phasenversetzt zum Drehmomentimpuls M_{A} der Brennkraftmaschine 2 - abgegeben. Dadurch kommt es zu einer Erhöhung des gesamtverfügbaren Antriebsdrehmomentes, wobei ein erster Teil durch die Brennkraftmaschine 2 und ein zweiter Teil des Antriebsdrehmomentes durch die zusätzliche Maschine 3 erzeugt wird, wie aus Fig. 2 hervorgeht. Wird zusätzlich zu den Drehmomentimpulsen M_{B} noch ein statisches Drehmoment durch die zusätzliche Maschine 3 aufgebracht, kann diese Kombination auch zur kurzfristigen Leistungssteigerung verwendet werden (Boostfunktion).

Weiters sind auch Kombinationen der beiden Betriebsarten (positiver zusätzlicher Drehmomentimpuls M_{B} und bedämpfter Betrieb) möglich.

Die Ansteuerung der Phasenverschiebung kann entweder aus dem Verlauf des Drehmomentes M_{A} der Brennkraftmaschine 2 oder aus der Zeitdifferenz der beiden letzten Verbrennungen an Hand von im Motorsteuergerät hinterlegter Informationen, zum Beispiel der Zündung oder dem Einspritzzeitpunkt, bestimmt werden.

Fig. 3 zeigt ein Amplituden-Frequenzspektrum, wobei im Diagramm die Amplitude X über der Frequenz f aufgetragen ist. Mit f_{E} ist die Eigenfrequenz des Antriebsstranges 1 bezeichnet, f₁ stellt die Anregungsfrequenz durch die Brennkraftmaschine 2 - ohne zusätzlicher Anregung durch die zusätzliche Maschine 3 dar, wobei die Schwingungsamplitude X₁ beträgt. Wird zusätzlich ein positiver Drehmomentimpuls M_{B} durch die zusätzliche Maschine 3 eingebracht, so kann die Anregungsfrequenz auf f₂ verdoppelt und die Schwingungsamplitude wesentlich auf X₂ verringert werden.

Durch eine Kombination mit akustischen Maßnahmen, die zeitlich abgestimmt mit dem zusätzlich eingebrachten Drehmomentimpuls M_{B} stattfinden, kann zusätzlich eine akustische Verdopplung und somit eine subjektive Verbesserung des Geräuschverhaltens erzielt werden.

Durch die zusätzliche Aufbringung eines positiven zusätzlichen Drehmomentimpulses M_{B} können bessere Wirkungsgrade erhalten werden. Dadurch ist es möglich, weitere Einsparungen im Verbrauch zu erzielen. Durch die Verbesserung des Schwingungsverhaltens kann der Komfort im Vergleich zu anderen Brennkraftmaschinen gleicher Zylinderzahl erheblich verbessert werden.

## Patentansprüche

1. Verfahren zur Drehschwingungsberuhigung in einem Antriebsstrang (1), welcher eine Brennkraftmaschine (2), insbesondere eine Hubkolbenmaschine, und zumindest eine mit dieser verbundene zusätzliche Maschine (3), insbesondere elektrische Maschine, aufweist, wobei während zumindest einer ersten Phase (A) von der Brennkraftmaschine (2) ein Drehmomentimpuls (M_{A}) in den Antriebsstrang (1) eingeleitet wird, und wobei durch die zusätzliche Maschine (3) gezielt zumindest ein Drehmomentimpuls (M_{B}) zur Drehschwingungsberuhigung generiert wird, wobei der Drehmomentimpuls (M_{B}) der zusätzlichen Maschine (3) phasenversetzt zum Drehmomentimpuls (M_{A}) der Brennkraftmaschine (2) in den Antriebsstrang (1) während zumindest einer auf die erste Phase (A) folgenden zweiten Phase (B) eingebracht wird, **dadurch gekennzeichnet, dass** der von der zusätzlichen Maschine (3) generierte Drehmomentimpuls (M_{B}) gleichsinnig zur Anregung durch die Brennkraftmaschine (2) erfolgt, so dass die Anregungsfrequenz (f) erhöht, vorzugsweise verdoppelt wird.

2. Verfahren nach Anspruch 1, **dadurch gekennzeichnet, dass** die Amplitude des von der zusätzlichen Maschine (3) generierten Drehmomentimpulses (M_{B}) im Wesentlichen der Amplitude des während der ersten Phase (A) in den Antriebsstrang (1) eingeleiteten Drehmomentimpulses (M_{B}) entspricht.

3. Verfahren nach Anspruch 1 oder 2, **dadurch gekennzeichnet, dass** die Form des von der zusätzlichen Maschine (3) generierten Drehmomentimpulses (M_{B}) im Wesentlichen der Form des während der ersten Phase (A) in den Antriebsstrang (1) eingeleiteten Drehmomentimpulses (M_{A}) entspricht.

4. Verfahren nach einem der Ansprüche 1 bis 3, **dadurch gekennzeichnet, dass** dem während der zweiten Phase (B) durch die zusätzliche Maschine (3) generierten Drehmomentimpuls (M_{B}) ein Dreieck-, Rechteck- oder Sinussignal zugrunde liegt.

5. Verfahren nach einem der Ansprüche 1 bis 4, **dadurch gekennzeichnet, dass** das Spektrum des von der zusätzlichen Maschine (3) während der zweiten Phase (B) generierten Drehmomentimpulses (M_{B}) so gestaltet wird, dass definierte Abschnitte des Spektrums zwischen zwei aufeinanderfolgenden ersten Phasen (A) wiederholt werden.

6. Verfahren nach einem der Ansprüche 1 bis 5, **dadurch gekennzeichnet, dass** während der ersten Phase (A) die zusätzliche Maschine (3) generatorisch und während der zweiten Phase (B) motorisch betrieben wird, wobei der Drehmomentimpuls (M_{A}) der Brennkraftmaschine (2) während der ersten Phase (A) zumindest teilweise bedämpft und während der zweiten Phase (B) zumindest der bedämpfte Anteil des Drehmomentimpulses (M_{A}) dem Antriebsstrang (1) wieder zugeführt wird.

7. Verfahren nach einem der Ansprüche 1 bis 6, **dadurch gekennzeichnet, dass** der Drehmomentverlauf (M) der Brennkraftmaschine (2) kontinuierlich, vorzugsweise auf Grund von Informationen aus der Motorsteuereinheit, ermittelt wird und dass der Drehmomentimpuls (M_{B}) der zusätzlichen Maschine (3) auf der Basis dieses Drehmomentverlaufes (M) generiert wird.

8. Verfahren nach einem der Ansprüche 1 bis 7, **dadurch gekennzeichnet, dass** eine Zeitdifferenz zwischen zwei aufeinanderfolgenden Verbrennungen, vorzugsweise aus der Information motorrelevanter Daten, besonders vorzugsweise über Zündzeitpunkte und/oder Einspritzzeitpunkte, ermittelt wird und dass die Lage des Drehmomentimpulses (M_{B}) der zusätzlichen Maschine (3) auf der Basis dieser Zeitdifferenz generiert wird.

9. Verfahren nach den Ansprüchen 1 bis 8, **dadurch gekennzeichnet, dass** die Zeitdifferenz und/oder der Drehmomentimpuls - Verlauf aus der Information über den Drehzahlverlauf der zusätzlichen Maschine (3) ermittelt wird.

10. Verfahren nach einem der Ansprüche 1 bis 9, **dadurch gekennzeichnet, dass** der in der zweiten Phase (B) generierte Drehmomentimpuls (M_{B}) der zusätzlichen Maschine (3) bzw. die in der zweiten Phase (B) generierten Drehmomentimpulse (M_{B}) der zusätzlichen Maschine (3) gleichmäßig zwischen zwei aufeinanderfolgenden Drehmomentimpulsen (M_{A}) der Brennkraftmaschine (2) positioniert wird bzw. werden.

11. Verfahren nach einem der Ansprüche 1 bis 10, **dadurch gekennzeichnet, dass** zwischen der Brennkraftmaschine (2) und der zusätzlichen Maschine (3) eine lösbare Verbindung (4) ausgeführt wird, welche eine so hohe Drehsteifigkeit aufweist, dass sie im Frequenzbereich der primären Anregungen näherungsweise als starr betrachtet werden kann.

12. Verfahren nach einem der Ansprüche 1 bis 10, **dadurch gekennzeichnet, dass** zwischen der Brennkraftmaschine (2) und der zusätzlichen Maschine (3) eine lösbare Verbindung (4) ausgeführt wird, welche ein in ausgewählten Frequenzbereichen wirksames Entkoppelungselement, beispielsweise in Form eines elastisches Element oder Fliehkraftpendels, aufweist.

13. Verfahren nach einem der Ansprüche 1 bis 12, **dadurch gekennzeichnet, dass** zwischen der Brennkraftmaschine (2) und der zusätzlichen Maschine (3) ein Getriebe angeordnet wird.

## Claims

1. A method for damping torsional vibration in a drive train (1), which comprises an internal combustion engine (2), in particular a reciprocating piston engine, and at least one additional machine (3), in particular an electrical machine, which is connected thereto, wherein a torque impulse (M_{A}) is introduced into the drive train (1) by the internal combustion engine (2) during at least one first phase (A), and wherein at least one torque pulse (M_{B}) is specifically generated by the additional machine (3) to dampen torsional vibration, wherein the torque pulse (M_{B}) of the additional engine (3) is introduced into the drive train (1) at a phase offset from the torque pulse (M_{A}) of the internal combustion engine (2) during at least one second phase (B) following the first phase (A), **characterised in that** the torque pulse (M_{B}) generated by the additional machine (3) occurs in the same direction to the excitation by the internal combustion engine (2), so that the excitation frequency (f) is increased, preferably doubled.

2. A method according to claim 1, **characterised in that** the amplitude of the torque pulse (M_{B}) generated by the additional machine (3) essentially corresponds to the amplitude of the torque pulse (M_{B}) introduced into the drive train (1) during the first phase (A).

3. A method according to claim 1 or 2, **characterised in that** the shape of the torque pulse (M_{B}) generated by the additional machine (3) essentially corresponds to the shape of the torque pulse (M_{A}) introduced into the drive train (1) during the first phase (A).

4. A method according to one of the claims 1 to 3, **characterised in that** the torque pulse (M_{B}) generated by the additional machine (3) during the second phase (B) is based on a triangular, rectangular or sinusoidal signal.

5. A method according to one of the claims 1 to 4, **characterised in that** the spectrum of the torque pulse (M_{B}) generated by the additional machine (3) during the second phase (B) is designed such that defined sections of the spectrum between two successive first phases (A) are repeated.

6. A method according to one of the claims 1 to 5, **characterised in that** the additional machine (3) is operated during the first phase (A) as a generator and during the second phase (B) as a motor, wherein the torque pulse (M_{A}) of the internal combustion engine (2) is at least partly damped during the first phase (A), and at least the damped portion of the torque pulse (M_{A}) is fed back again to the drive train (1) during the second phase (B).

7. A method according to one of the claims 1 to 6, **characterised in that** the torque curve (M) of the internal combustion engine (2) is determined continuously, preferably on the basis of information from the engine control unit, and that the torque pulse (M_{B}) of the additional machine (3) is generated on the basis of this torque curve (M).

8. A method according to one of the claims 1 to 7, **characterised in that** a time difference between two successive combustions, preferably from the information of engine-relevant data, is determined particularly preferably by means of ignition times and/or injection times, and that the position of the torque pulse (M_{B}) of the additional machine (3) is generated on the basis of said time difference.

9. A nethod according to the claims 1 to 8, **characterised in that** the time difference and/or the torque pulse curve is determined from the information about the speed curve of the additional machine (3).

10. A method according to one of the claims 1 to 9, **characterised in that** the torque pulse (M_{B}) of the additional machine (3) generated in the second phase (B) or the torque pulses (M_{B}) of the additional machine (3) generated in the second phase (B) is or are evenly positioned between two successive torque pulses (M_{A}) of the internal combustion engine (2).

11. A method according to one of the claims 1 to 10, **characterised in that** a releasable connection (4) is implemented between the internal combustion engine (2) and the additional machine (3), which has such a high torsional stiffness that it can be regarded approximately as rigid in the frequency range of the primary excitations.

12. A method according to one of the claims 1 to 10, **characterised in that** a releasable connection (4) is implemented between the internal combustion engine (2) and the additional machine (3), which has a decoupling element acting in selected frequency ranges, for example in the form of an elastic element or a centrifugal force pendulum.

13. A method according to one of the claims 1 to 12, **characterised in that** a transmission is arranged between the internal combustion engine (2) and the additional engine (3).

## Revendications

1. Procédé d'amortissement des vibrations torsionnelles dans une ligne d'entraînement (1) qui comporte un moteur à combustion interne (2), en particulier, un moteur à pistons alternatifs et au moins un moteur supplémentaire (3), en particulier un moteur électrique relié à celui-ci, procédé selon lequel pendant au moins une première phase (A) une impulsion de couple (M_{A}) est introduite par le moteur à combustion interne (2) dans la ligne d'entraînement (1), et, au moins une impulsion de couple (M_{B}) est générée de façon ciblée par le moteur supplémentaire (3) pour permettre un amortissement des vibrations torsionnelles, l'impulsion de couple (M_{B}) du moteur supplémentaire (3) étant mise en oeuvre dans la ligne d'entraînement (1) avec un décalage de phase par rapport à l'impulsion de couple (M_{A}) du moteur à combustion interne (2) pendant au moins une seconde phase (B) suivant la première phase (A),
**caractérisé en ce que**
l'impulsion de couple (M_{B}) générée par le moteur supplémentaire (3) se produit dans le même sens que l'excitation par le moteur à combustion interne (2) de façon à augmenter la fréquence d'excitation (f) et en particulier à la doubler.

2. Procédé conforme à la revendication 1,
**caractérisé en ce que**
l'amplitude de l'impulsion de couple (M_{B}) générée par le moteur supplémentaire (3) correspond essentiellement à l'amplitude de l'impulsion de couple (M_{A}) introduite dans la ligne d'entraînement (1) pendant la première phase (A).

3. Procédé conforme à la revendication 1 ou 2,
**caractérisé en ce que**
la forme de l'impulsion de couple (M_{B}) générée par le moteur supplémentaire (3) correspond essentiellement à la forme de l'impulsion de couple (M_{A}) introduite dans la ligne d'entraînement (1) pendant la première phase (A).

4. Procédé conforme à l'une des revendications 1 à 3,
**caractérisé en ce que**
l'impulsion de couple (M_{A}) générée par le moteur supplémentaire (3) pendant la seconde phase (B) est basée sur un signal triangulaire, rectangulaire ou sinusoïdal.

5. Procédé conforme à l'une des revendications 1 à 4,
**caractérisé en ce que**
le spectre de l'impulsion de couple (M_{B}) générée par le moteur supplémentaire (3) pendant la seconde phase (B) est conformé de sorte que des segments définis du spectre soient répétés entre deux premières phases (A) successives.

6. Procédé conforme à l'une des revendications 1 à 5,
**caractérisé en ce que**
le moteur supplémentaire (3) est actionné en tant que générateur pendant la première phase (A), et en tant que moteur, pendant la seconde phase (B), l'impulsion de couple (M_{A}) du moteur à combustion interne (2) étant amortie au moins partiellement pendant la première phase (A), et, pendant la seconde phase (B) au moins la fraction amortie de l'impulsion de couple (M_{A}) étant à nouveau transmise à la ligne d'entraînement (1).

7. Procédé conforme à l'une des revendications 1 à 6,
**caractérisé en ce que**
les variations (M) du couple du moteur à combustion interne (2) sont déterminées en continu de préférence sur le fondement d'informations provenant de l'unité de commande du moteur, et l'impulsion de couple (M_{B}) du moteur supplémentaire (3) est générée sur le fondement de ces variations (M).

8. Procédé conforme à l'une des revendications 1 à 7,
**caractérisé en ce que**
la différence de temps entre deux combustions successives est déterminée de préférence à partir de l'information de données importantes du moteur, de façon particulièrement préférentielle par l'intermédiaire d'instants d'allumage et/ou d'instants d'injection, et la position de l'impulsion de couples (M_{B}) du moteur supplémentaire (3) est générée sur le fondement de cette différence de temps.

9. Procédé conforme aux revendications 1 à 8,
**caractérisé en ce que**
la différence de temps et/ou les variations de l'impulsion de couple sont déterminées à partir de l'information concernant les variations de la vitesse de rotation du moteur supplémentaire (3).

10. Procédé conforme à l'une des revendications 1 à 9,
**caractérisé en ce que**
l'impulsion ou les impulsions de couple (M_{B}) du moteur supplémentaire (3) générées pendant la seconde phase (B) sont situées uniformément entre deux impulsions de couple (M_{A}) successives du moteur à combustion interne (2).

11. Procédé conforme à l'une des revendications 1 à 10,
**caractérisé en ce qu'**
entre le moteur à combustion interne (2) et le moteur supplémentaire (3) est montée une liaison amovible (4) qui présente une rigidité en tension telle qu'elle puisse être considérée comme approximativement rigide dans la plage de fréquences des excitations primaires.

12. Procédé conforme à l'une des revendications 1 à 10,
**caractérisé en ce qu'**
entre le moteur à combustion interne (2) et le moteur supplémentaire (3) est montée une liaison amovible (4) qui comporte un élément de découplage actif dans des plages de fréquences sélectionnées, par exemple sous la forme d'un élément élastique ou d'un pendule centrifuge.

13. Procédé conforme à l'une des revendications 1 à 12,
**caractérisé en ce qu'**
une transmission est montée entre le moteur à combustion interne (2) et le moteur supplémentaire (3).
